# EUROPÄISCHE PATENTSCHRIFT

(11) **EP 0 352 600 B1**
(45) Veröffentlichungstag und Bekanntmachung des Hinweises auf die Patenterteilung: **29.12.1993**
(21) Anmeldenummer: 89113130.2
(22) Anmeldetag: 18.07.1989
(51) Int. Cl.: B41F 13/14

(54) **Vorrichtung zur Verstellung der relativen Winkellage eines angetriebenen Rotationskörpers**
Device for shifting the relative angular position of a driven rotary body
Dispositif de changement de la position angulaire relative d'un corps rotatif entraîné

(30) Priorität: 26.07.1988 DE 3825307
(43) Veröffentlichungstag der Anmeldung: 31.01.1990
(73) Patentinhaber: M.A.N.-ROLAND Druckmaschinen Aktiengesellschaft, 63012 Offenbach (DE)
(72) Erfinder: Köbler, Ingo, D-8901 Anhausen (DE); Gensheimer, Valentin, D-6052 Mühlheim (DE)

(56) Entgegenhaltungen:
- EP-A- 0 147 290
- EP-A- 0 174 475
- EP-A- 0 234 676
- EP-A- 0 359 917
- US-A- 4 709 634

## Beschreibung

Die Erfindung betrifft eine Vorrichtung zur Verstellung der relativen Winkellage eines angetriebenen Rotationskörpers gemäß dem Oberbegriff des Patentanspruchs 1.

Eine gattungsgemäße Vorrichtung ist bei einer Rotationsdruckmaschine als Vorrichtung zur Verstellung des Umfangsregisters eines Plattenzylinders bekannt (EP 0 174 475 A1). Bei dieser Vorrichtung wird dabei mittels eines Schnecken- und eines Schraubtriebes ein Wellenteil verschoben, das eine Schnecke trägt, die über ein Schneckenrad eine Druckeinheit antreibt. Die Verschiebung des Wellenteils bewirkt eine Zusatzdrehung des Schneckenrades und somit eine Umfangsregisterverstellung. Elastisch verformbare Federelemente an den Stirnseiten des Wellenteiles gestatten dessen Axialverschiebung ohne störenden Einfluß auf angekuppelte Wellenteile, z.B. zu anderen Druckeinheiten.

Bei Belastungsänderungen ergeben sich aufgrund wechselnder Torsionsbeanspruchungen im Antriebsstrang Umfangsregisterabweichungen am angetriebenen Rotationskörper - hier Plattenzylinder -, die mit den bekannten Mitteln nicht ausgeregelt werden können. Außerdem bedingt die Vorrichtung ein Schnecke-Schneckenrad-Getriebe, das z.B. bei diversen Antrieben nachteilig und daher nicht üblich ist.

Belastungsabhängige Umfangsregisterabweichungen sind auch bei anderweitigen Registerverstellvorrichtungen, die sich z.B. eines schrägverzahnten Antriebsrades bedienen, das bei Axialverschiebung im Zusammenspiel mit einem gegenläufig schrägverzahnten weiteren Antriebsrad eine Verdrehung des Plattenzylinders bewirkt, mit den bekannten Mitteln nicht ausgleichbar.

Der Erfindung liegt die Aufgabe zugrunde, eine gattungsgemäße Vorrichtung zu schaffen, mit der in einfacher Weise lastabhängige Abweichungen der relativen Winkellage eines angetriebenen Rotationskörpers kompensiert werden können.

Diese Aufgabe wird erfindungsgemäß durch die Merkmale des Kennzeichens des Patentanspruchs 1 gelöst. Vorteilhafte Ausgestaltungen der Erfindung sind den Unteransprüchen zu entnehmen.

Nachfolgend sind zwei Ausführungsbeispiele der Erfindung an einer Rotationsdruckmaschine anhand der Zeichnungen erklärt. Es zeigt
- Fig. 1: eine schematische Darstellung eines Antriebsstranges an einer Rotationsdruckmaschine, mit einer elektrischen Meß- und Kompensationsvorrichtung der drehmomentabhängigen Registerabweichung,
- Fig. 2 bis 4: die kinematischen Verhältnisse an den Flanschen des Wellenmittelteils in Ruhelage,
- Fig. 5 bis 7: die kinematischen Verhältnisse an den Flanschen des Wellenmittelteils bei axialer Verschiebung desselben,
- Fig. 8: eine Variante mit einer rein mechanischen Kompensation der drehmomentabhängigen Registerabweichung.

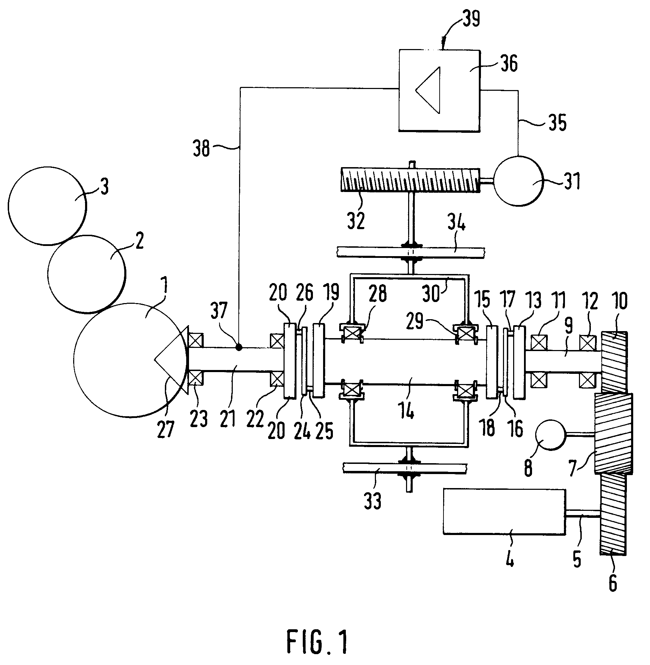

In Fig. 1 ist schematisch ausgehend von einem Plattenzylinder 1, der mit einem Gummituchzylinder 2 und einem Druckzylinder 3 ein Druckwerk einer nicht näher gezeigten Rotationsdruckmaschine bildet, der längs einer Maschinenseitenwand angeordnete Antriebsstrang bis zum Hauptmotor 4 dargestellt.

Der Hauptmotor 4 treibt über ein auf seiner Antriebswelle 5 fest angeordnetes schrägverzahntes Ritzel 6 ein schrägverzahntes Zahnrad 7, das über einen Motor 8 axial verschiebbar ist. Mit diesem Zahnrad 7 kämmt ein weiteres, fest mit einem Ende eines ersten Wellenteils 9 verbundenes, schrägverzahntes Zahnrad 10. Das Wellenteil 9 ist durch zwei Lager 11, 12 axial unverrückbar gelagert und weist an seinem anderen Ende einen Flansch 13 mit einem vergrößerten Durchmesser auf. An das Wellenteil 9 grenzt auf der Seite des Flansches 13 in einigem Abstand ein Wellenmittelteil 14 mit einem Flansch 15 an. Das Wellenteil 9 und das Wellenmittelteil 14 sind koaxial zueinander angeordnet.

Zwischen den vorzugsweise einen gleichen Durchmesser aufweisenden Flanschen 13 und 15 ist ein in Umfangsrichtung der Flansche drehsteifes, in deren axialer Richtung dagegen elastisch verformbares Federelement 16 angeordnet. Das Federelement 16 ist kurbelartig über einen Zapfen 17 mit dem Flansch 13 und über einen Zapfen 18 mit dem Flansch 15 verbunden. Die Zapfen 17, 18 sind jeweils an einem Ende des Federelements 16 auf gegenüberliegenden Seiten angeordnet und an den Flanschen 13 bzw. 15 außermittig befestigt.

Das Wellenmittelteil 14 weist an seiner linken Stirnseite einen weiteren Flansch 19 auf, der im Durchmesser dem Flansch 15 entspricht. Koaxial zu diesem ist in einem axialen Abstand ein vorzugsweise im Durchmesser gleich großer Flansch 20 angeordnet, der an der rechten Stirnseite eines weiteren Wellenteils 21 fest angeordnet ist. Das Wellenteil 21 wird von zwei Lagern 22, 23 axial gehalten. Zwischen den Flanschen 19 und 20 ist ein in Umfangsrichtung der Flansche drehsteifes, in axialer Richtung dagegen elastisch verformbares Federelement 24 angeordnet. Das Federelement 24 ist kurbelartig über einen Zapfen 25 mit dem Flansch 19 und über einen Zapfen 26 mit dem Flansch 20 verbunden. Die Zapfen 25, 26 sind jeweils an einem Ende des Federelements 24 auf gegenüberliegenden Seiten angeordnet und an den Flanschen 19 bzw. 20 außermittig befestigt.

Das linke Ende des Wellenteils 21 ist eingangsseitig mit einem nur schematisch angedeuteten Kegelradgetriebe 27 verbunden, durch welches ausgangsseitig der Plattenzylinder 1 angetrieben wird.

Das Wellenmittelteil 14 wird von zwei Lagern 28, 29 so gehalten, daß es sowohl drehbar als auch axial verschiebbar ist. Im ersten Ausführungsbeispiel gemäß Fig. 1 sind die Lager 28, 29 zu diesem Zweck in einer Verschiebebrücke 30 fest angeordnet, die mittels einer von einem Stellmotor 31 drehbaren Stellspindel 32 längs zweier Führungsstangen 33, 34 parallel zur Achse der Wellenteile 9, 14, 21 verfahrbar ist.

Der Stellmotor 31 ist eingangsseitig über eine Leitung 35 mit einem Geber 36 verbunden. Dieser weist einen Verstärker, ein Leistungsteil und eine Schaltlogik auf. Im Beispiel nach Fig. 1 ist am Wellenteil 21 eine Anordnung von Dehnungsmeßstreifen 37 vorgesehen, die so angebracht sind, daß eine Verdrehung des Wellenteils 21 eine proportionale Änderung ihres elektrischen Widerstands bewirkt. Die Dehnungsmeßstreifen sind über eine Leitung 38 mit der Eingangsseite des Gebers 36 verbunden.

Der Plattenzylinder 1 wird vom Hauptmotor 4 über das Ritzel 6, die Zahnräder 7 und 10, die Wellenteile 9, 14 und 21 mit den zwischengeschalteten Federelementen 16 und 24 sowie das Kegelradgetriebe 27 angetrieben. Die Einstellung des Umfangsregisters des Plattenzylinders 1 erfolgt in bekannter Weise über eine Betätigung eines Tasters am Stellpult, die den Motor 8 in Bewegung setzt. Der Motor 8 bewirkt eine axiale Verschiebung des schrägverzahnten Zahnrades 7. Die dabei erfolgende Abwälzung der schrägen Flanken des Zahnrades 7 gegenüber den schrägen Flanken des Zahnrades 10 und des Ritzels 6 bewirkt eine der normalen Antriebsbewegung überlagerte Verdrehung des Plattenzylinders.

Zur Kompensation lastabhängiger Drehwinkelveränderungen im Antriebsstrang wird die Verdrehung eines im Antriebsstrang liegenden Wellenteils - im Beispiel 21 - mittels der als Meßwertaufnehmer fungierenden Dehnungsmeßstreifen 37 erfaßt und über den Geber 36 ein die Verdrehung kompensierendes Stellsignal an den Stellmotor 31 abgegeben. Der Stellmotor 31 verschiebt durch Drehung der Stellspindel 32 die Verschiebebrücke 30, wodurch das Wellenmittelteil 14 um einen gleich großen Betrag X₁ axial verschoben wird.

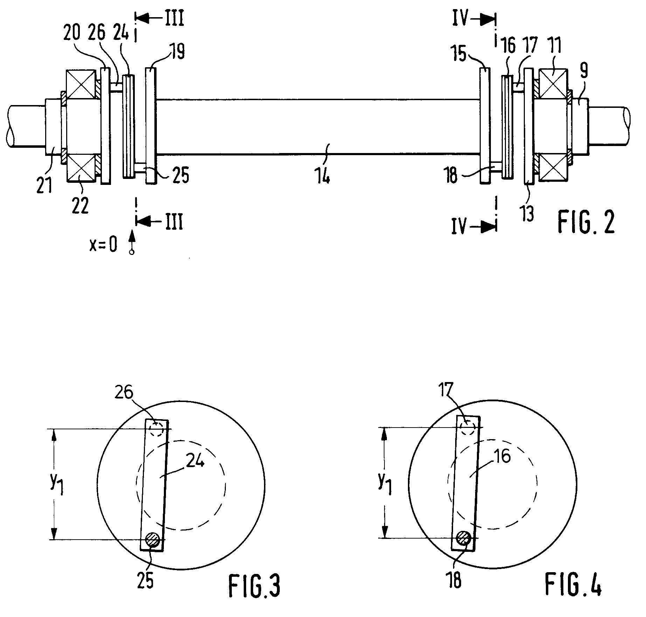

In Fig. 2 ist das Wellenmittelteil 14 in einer als Nullposition X=0 bezeichneten Lage dargestellt. Dabei nehmen die Federelemente 16 und 24 eine gestreckte Lage in einer senkrecht zur Achse des Wellenmittelteils 14 liegenden Ebene ein. Die Zapfen 25 und 26 bzw. 17 und 18 haben einen Abstand y₁ voneinander (siehe Fig. 3 und 4).

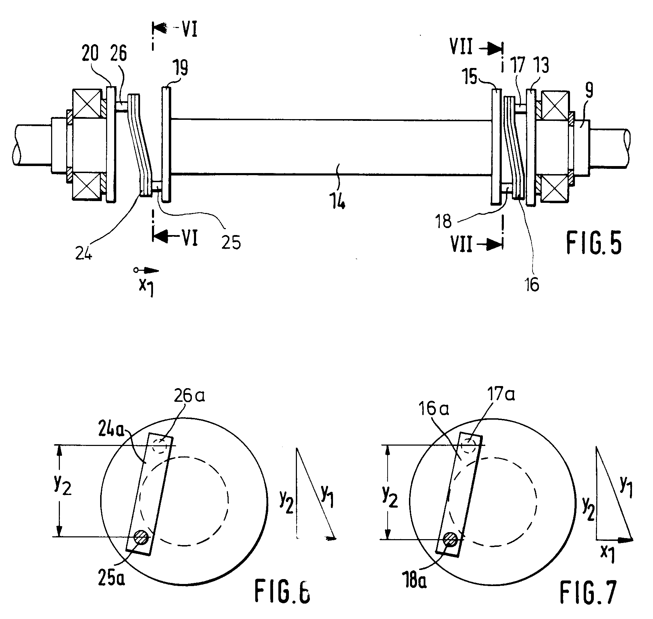

Wenn nun, wie in Fig. 5 dargestellt, das Wellenmittelteil 14 um einen Betrag X₁ in axialer Richtung gegenüber der Nullposition verschoben wird, so ändert sich dadurch der vertikale Abstand der Zapfen 25 und 26 bzw. 17 und 18 auf einen Wert y₂. Die Zapfen 18 und 25 am Wellenmittelteil 14 wandern infolge der Verkürzung und der exzentrischen Befestigung der Federelemente 16, 24 an den Flanschen in Umfangsrichtung auf einem Radius in die in Fig. 6 bzw. 7 mit 25a bzw. 18a bezeichnete neue Lage. Das Wellenmittelteil 14 wird dadurch verdreht und ist bestrebt, die Verdrehung durch die torsionssteife Gestaltung der Federelemente auch an die benachbarten Wellenteile 9 und 21 weiterzugeben. Da das Wellenteil 9 durch seine Verbindung zum Hauptmotor 4 in Umfangsrichtung fixiert ist, wird die Verdrehung voll an das zum Plattenzylinder 1 führende Wellenteil 21 weitergegeben. Die Zapfen 17, 18 bzw. 25, 26 sind entsprechend den Fig. 6 und 7 so auf den Flanschen 13, 15 bzw. 19, 20 angeordnet, das die aus einer axialen Verschiebung des Wellenmittelteils 14 resultierenden Rückstellkräfte in beiden Federelementen 16, 24 ein Kräftepaar gleichen Drehsinns ergeben.

Durch eine genaue Abstimmung des Gebers 36 läßt sich somit eine äußerst feinfühlige Kompensation lastabhängiger Torsion im Antriebsstrang erreichen.

Durch einen zusätzlichen Taster 39 am Geber 36 können außerdem von Hand wesentlich feinere Korrekturen an der Umfangsregistereinstellung des Plattenzylinders vorgenommen werden, als dies über eine Axialverschiebung des Zahnrades 7 möglich ist. Die erfindungsgemäße Vorrichtung ist also in dieser Ausführungsform sowohl als Kompensationsvorrichtung für lastabhängige Torsion als auch als Umfangsregister- Feineinstellung anwendbar.

In Abwandlung zu dem vorstehend beschriebenen Ausführungsbeispiel mit am Wellenmittelteil 14 an beiden Seiten angeordneten Federelementen 16, 24 ist es ebenso denkbar, nur an der linken Seite des Wellenmittelteils 14 ein Federelement 24 zur Verbindung mit dem benachbarten Wellenteil 21 vorzusehen. Die rechte Seite des Wellenmittelteils 14 könnte mit dem in Richtung des Antriebsaggregates 4 benachbarten Wellenteil 9 auch über jede andere Drehkräfte übertragende, jedoch Axialverschiebungen zulassende Verbindung gekuppelt sein. Beispielsweise kann das rechte Ende des Wellenmittelteils 14 mit einem Außenprofil einer Vielkeil- oder Polygonwelle versehen sein und das linke Ende des Wellenteils 9 ein entsprechendes Innenprofil aufweisen.

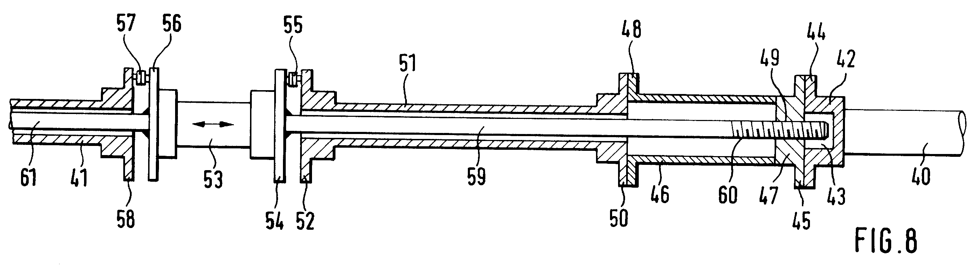

In Fig. 8 ist ein zweites Ausführungsbeispiel dargestellt, bei dem die Kompensation der lastabhängigen Torsion mit rein mechanischen Mitteln gelöst ist. Ein analog zur Fig. 1 von einem Hauptmotor angetriebenes Wellenteil 40, dem in Fig. 1 das Wellenteil 9 entspricht, ist mittels mehrerer nachfolgend beschriebener Elemente einer Torsions-Kompensationsvorrichtung mit einem Wellenteil 41 verbunden, das dem Wellenteil 21 in Fig. 1 entspricht und das Motordrehmoment zum Plattenzylinder weiterleitet.

Das Wellenteil 40 ist an seinem linken Ende mit einem Flansch 42 verbunden, der innen einen hohlzylindrischen Raum 43 aufweist und mittels eines außen liegenden Flanschrings 44 mit einem Flanschring 45 eines Torsionskörpers 46 verbunden ist. Der Torsionskörper 46 besteht aus einer dünnwandigen zylindrischen Buchse, die rechtsseitig von einer mit dem Flanschring 45 verbundenen Platte 47 und linksseitig von einem weiteren, außen angebrachten Flanschring 48 begrenzt wird. Die Platte 47 weist eine sie zentrisch in axialer Richtung durchdringende Gewindebohrung 49 auf. Mit dem Flanschring 48 ist ein Flansch 50 einer sich linksseitig an den Torsionskörper 46 anschließenden Hohlwelle 51 verbunden. Die Hohlwelle 51 weist an ihrer linken Stirnseite einen weiteren Flansch 52 auf. An diesem ist ein Wellenmittelteil 53 mit seinem rechtsseitigen Flansch 54 über ein Federelement 55 angekoppelt. Am linksseitigen Flansch 56 des Wellenmittelteils 53 ist ein weiteres Federelement 57 mit einem Ende befestigt, dessen anderes Ende mit einem Flansch 58 des Wellenteils 41 verbunden ist. Die Federelemente 55 und 57 sind in Fig. 8 nur schematisch angedeutet. Ihr Aufbau und ihre Anordnung zwischen den Flanschen 52, 54 bzw. 56, 58 sind identisch zu den Federelementen 16 und 24 des ersten Ausführungsbeispiels.

Im Unterschied zum ersten Ausführungsbeispiel wird die axiale Verschiebung des Wellenmittelteils nicht von einer außen an diesem angreifenden Verschiebebrücke, sondern von einer Schubstange 59 bewirkt, die in der Mitte des rechten Flansches 54 des Wellenmittelteils 53 befestigt ist, die Hohlwelle 51 und den Torsionskörper 46 durchdringt und mit einem an ihrem rechten Ende angeordneten Außengewinde 60 mit dem Innengewinde der Gewindebohrung 49 im Eingriff steht. Das Außengewinde 60 kann sich auch bei vollständigem Durchdringen der Gewindebohrung 49 in den Raum 43 hineinbewegen.

Ein vom Hauptmotor auf das Wellenteil 40 übertragenes Drehmoment bewirkt eine diesem proportionale Verdrehung des Torsionskörpers 46. Da sich mit dem Torsionskörper 46 auch die Platte 47 mit der Gewindebohrung 49 verdreht, wird auf die linksseitig mit dem Wellenmittelteil 53 verbundene Schubstange 59 mittels des Außengewindes 60 gleichzeitig eine Zug- oder Druckkraft ausgeübt. Diese Kraft bewirkt eine axiale Verschiebung des Wellenmittelstücks 53. Durch die entsprechend dem ersten Beispiel exzentrisch an den Flanschen angeordneten Federelemente 55, 57 wird das Wellenmittelteil 53 dabei verdreht.

Bei entsprechender Auslegung der Bauteile läßt sich eine exakte Kompensation der lastabhängigen Torsion im Antriebsstrang erreichen.

Wie am linken Rand der Fig. 8 angedeutet, kann am Wellenmittelteil 53 linksseitig zusätzlich eine weitere Schubstange 61 befestigt sein, die die Axialbewegung auf ein weiteres, nicht dargestelltes, ebenfalls durch Federelemente mit benachbarten Wellenteilen verbundenes Wellenmittelteil überträgt. Das Wellenteil 41 ist in diesem Fall als Hohlwelle ausgebildet. Mit einer registerartigen Hintereinanderschaltung mehrerer durch Federelemente mit benachbarten Wellenteilen verbundener Wellenmittelteile läßt sich eine sehr feine Abstimmung der Drehwinkel-Kompensation erreichen.

Die Erfindung ist grundsätzlich an allen Maschinen einsetzbar, bei denen die relative Winkellage eines angetriebenen Rotationskörpers gegenüber der seines Antriebsaggregats von Bedeutung ist. Als weiteres Anwendungsbeispiel sei ein rotierender Stanzzylinder einer Karton- Stanzmaschine genannt.

## Patentansprüche

1. Vorrichtung zur Verstellung der relativen Winkellage eines angetriebenen Rotationskörpers gegenüber einem mit einem Antriebsaggregat verbundenen Wellenteil, insbesondere zur Verstellung des Umfangsregisters an einem Plattenzylinder einer Rotationsdruckmaschine, wobei zwischen dem Antriebsaggregat und dem Rotationskörper mehrere koaxial zueinander angeordnete Wellenteile (9,14,21;40,46,51,53,41) angeordnet sind, deren axial verschiebbar gelagertes Wellenmittelteil (14; 53) an wenigstens einer seiner Stirnseiten mit einem benachbarten Wellenteil (9, 21;41,51) mittels eines in Umfangsrichtung drehsteifen und in axialer Richtung der Wellenteile elastisch verformbaren Federelements (16, 24; 55, 57) verbunden ist, dadurch gekennzeichnet, daß die Befestigungspunkte des Federelements (16, 24; 55, 57) an beiden verbundenen Wellenteilen (9, 14; 14, 21; 41, 53; 53, 51) außermittig angeordnet sind und daß am Wellenmittelteil (14;53) eine Vorrichtung (30;59) zur drehmomentproportionalen Axialverschiebung desselben angreift.

2. Vorrichtung gemäß Anspruch 1, dadurch gekennzeichnet, daß das Wellenmittelteil (14; 53) an beiden Stirnseiten mit je einem benachbarten Wellenteil (9, 21; 41, 51) mittels eines in Umfangsrichtung drehsteifen und in axialer Richtung der Wellenteile elastisch verformbaren Federelements (16, 24; 55, 57) verbunden ist, und beide Federelemente (16, 24; 55, 57) am Wellenmittelteil (14; 53) so angeordnet sind, daß die aus dessen Axialverschiebung resultierenden Rückstellkräfte ein Kräftepaar gleichen Drehsinns ergeben.

3. Vorrichtung nach einem der vorhergehenden Ansprüche, dadurch gekennzeichnet, daß die am Wellenmittelteil (14) angreifende Stellvorrichtung aus folgenden Elementen besteht:
- einem im Antriebsstrang dem Wellenmittelteil (14) nachangeordneten Torsions-Meßwertaufnehmer (37)
- einem dem Meßwertaufnehmer nachgeschalteten Geber (36) mit Verstärker und Leistungsteil, der einen
- Stellmotor (31) in Abhängigkeit von einem torsionsproportionalen Eingangssignal ansteuert,
- eine an der Abtriebwelle des Stellmotors (31) angeflanschte Stellspindel (32), deren Außengewinde mit einem Innengewinde
- einer Verschiebebrücke (30) im Eingriff steht, die parallel zum Wellenmittelstück (14) geführt ist und an der zwei das Wellenmittelteil (14) mit engem radialen Spiel umgebende und gegenüber jenem axial fixierte Lager (28, 29) angeordnet sind.

4. Vorrichtung nach Anspruch 3, dadurch gekennzeichnet, daß als Torsions-Meßwertaufnehmer (37) Dehnungsmeßstreifen verwendet werden.

5. Vorrichtung nach einem der Ansprüche 1 und 2, dadurch gekennzeichnet, daß die am Wellenmittelteil (53) angreifende Stellvorrichtung aus folgenden Elementen besteht:
- einer mit einer Stirnseite des Wellenmittelstücks (53) mittels eines Federelements (55) verbundenen Hohlwelle (51) die an ihrem anderen Ende mit einem
- dünnwandigen, zylindrischen Torsionskörper (46) verbunden ist, welcher wiederum an seinem anderen Ende außen in einem Flansch (45) mit einem dem Antriebsaggregat zugewandten Wellenteil (40) gekuppelt ist und in seinem Inneren in einer verstärkten Platte (47) eine zentrische Gewindebohrung (49) aufweist,
- eine Schubstange (59), deren eines, als Außengewinde (60) ausgebildetes Ende mit der Gewindebohrung (49) im Eingriff steht, die sich durch den Torsionskörper (46) und die Hohlwelle (51) hindurch bis zum Wellenmittelteil (53) erstreckt, und deren anderes Ende dort zentrisch fest mit jenem verbunden ist.

6. Vorrichtung nach einem der vorhergehenden Ansprüche, dadurch gekennzeichnet, daß als Federelement (16, 24; 55, 57) ein aus mehreren im Querschnitt rechteckigen Stahl-Lamellen geschichtetes Blattfederpaket verwendet wird.

## Claims

1. Device for adjusting the relative angular position of a driven rotary body with respect to a shaft portion connected to a drive unit, in particular for adjusting the circumferential register on a plate cylinder of a rotary printing machine, wherein between the drive unit and the rotary body several shaft portions (9, 14, 21; 40, 46, 51, 53, 41) are arranged coaxially to each other, of which the axially displaceably mounted central shaft portion (14; 53) is connected at at least one of its ends to an adjacent shaft portion (9, 21; 41, 51) by means of a spring element (16, 24; 55, 57) which is rigid with respect to rotation in the circumferential direction and resiliently deformable in the axial direction of the shaft portions, characterised in that the securing points of the spring element (16, 24; 55, 57) are arranged eccentrically on both connected shaft portions (9, 14; 14, 21; 41, 53; 53, 51) and in that a device (30; 59) engages on the central shaft portion (14; 53) for the torque-proportional axial shifting of the same.

2. Device according to claim 1, characterised in that the central shaft portion (14; 53) is connected at both ends respectively to an adjacent shaft portion (9, 21; 41, 51) by means of a spring element (16, 24; 55, 57) which is rigid with respect to rotation in the circumferential direction and resiliently deformable in the axial direction of the shaft portions, and both spring elements (16, 24; 55, 57) are arranged on the central shaft portion (14; 53) so that the restoring forces resulting from their axial shifting produce a pair of forces in the same direction of rotation.

3. Device according to one of the preceding claims, characterised in that the adjustment device engaging on the central shaft portion (14) comprises the following elements:
- a receiver (37) for the measured torque value arranged in the drive line downstream from the central shaft portion (14)
- a transmitter (36) having an amplifier and power section and connected downstream of the receiver for the measured value, which controls
- an adjustment motor (31) in dependence on an impact signal proportional to the torque,
- an adjustment spindle (32) flanged on the output shaft of the adjustment motor (31), the outer thread of which spindle is in engagement with an inner thread of
- a displacement bridge (30) which is guided parallel to the central shaft portion (14) and on which are arranged two bearings (28, 29) surrounding the central shaft portion (14) with a small radial clearance and axially fixed with respect to the shaft portion.

4. Device according to claim 3, characterised in that strain gauge strips are used as receivers (37) for the measured torque value.

5. Device according to one of claims 1 and 2, characterised in that the adjustment device engaging on the central shaft portion (53) comprises the following elements:
- a hollow shaft (51) connected to an end face of the central shaft piece (53) by means of a spring element (55), the shaft being connected at its other end to a
- thin-walled cylindrical torsion body (46) which in turn is coupled at its other end on the outside in a flange (45) to a shaft portion (40) facing the drive unit and has a central threaded bore (49) inside it in a reinforced plate (47)
- a thrust rod (59) whose one end formed as an outer thread (60) engages with the threaded bore (49) which extends through the torsion body (46) and the hollow shaft (51) through to the central shaft part (53), and whose other end is firmly connected there centrally to this central shaft part.

6. Device according to one of the preceding claims, characterised in that a stack of leaf springs layered from several steel lamellae of rectangular cross-section is used as the spring element (16, 24; 55, 57).

## Revendications

1. Dispositif pour faire varier la position angulaire relative d'un corps rotatif entraîné par rapport à une partie d'arbre accouplée à un groupe d'entraînement, notamment pour le réglage du repérage circonférentiel d'un cylindre porte-plaque d'une presse à imprimer rotative, dans lequel il est prévu entre le groupe d'entraînement et le corps tournant plusieurs parties d'arbre (9, 14, 21 ; 40, 46, 51, 53, 41) disposées coaxialement entre elles, dont la partie centrale (14 ; 53) montée mobile en translation axiale est accouplée, au droit d'au moins une de ses faces frontales, à une partie d'arbre (9, 21 ; 41, 51) adjacente au moyen d'un élément élastique (16, 24 ; 55, 57) rigide en rotation dans la direction circonférentielle et élastiquement déformable dans la direction axiale des parties d'arbre, caractérisé en ce que les points de fixation de l'élément élastique (16, 24 ; 55, 57) sont disposés en des positions excentrées sur les deux parties d'arbre (9, 14 ; 14, 21 ; 41, 53 ; 53, 51) accouplées, et en ce que la partie centrale (14 ; 53) de l'arbre est attaquée par un dispositif (30 ; 59) servant à lui imprimer une translation axiale proportionnelle au couple.

2. Dispositif selon la revendication 1, caractérisé en ce que, sur chacun de ses deux côtés frontaux, la partie (14 ; 53) de l'arbre est accouplée à une partie adjacente (9, 21 ; 41, 51) de l'arbre au moyen d'un élément élastique (16, 24 ; 55, 57) rigide en torsion dans la direction circonférentielle et élastiquement déformable dans la direction axiale des parties de l'arbre, et les deux éléments élastiques (16, 24 ; 55, 57) sont disposés sur la partie centrale (14 ; 53) de l'arbre de manière que les forces de rappel résultant de la translation axiale donnent naissance à deux forces de même sens de rotation.

3. Dispositif selon une des revendications précédentes, caractérisé en ce que le dispositif de réglage qui attaque la partie centrale (14) de l'arbre est composée des éléments suivants :
- un capteur (37) de valeurs de mesure de torsion monté dans la chaîne cinématique en aval de la partie centrale (14) de l'arbre,
- un émetteur (36) muni d'un amplificateur et d'une partie de puissance, placé en aval du capteur de valeurs de mesure, qui commande
- un servomoteur (31) en fonction d'un signal d'entrée proportionnel à la torsion,
- une vis de réglage (32) fixée par un flasque à l'arbre de sortie du servomoteur (31), et dont le filetage extérieur est en prise avec un filetage intérieur
- d'un pont de translation (30) qui est guidé parallèlement à la partie centrale (14) de l'arbre et sur lequel sont montés deux paliers (28, 29) entourant la partie centrale (14) de l'arbre et bloqués par rapport à cette partie dans la direction axiale.

4. Dispositif selon la revendication 3, caractérisé en ce qu'on utilise de jauges de contrainte en tant que capteurs de valeurs de mesure de torsion (37).

5. Dispositif selon une des revendications 1 et 2, caractérisé en ce que le dispositif de réglage qui attaque la partie centrale (53) de l'arbre est composé des éléments suivants :
- un arbre creux (51) accouplé à un côté frontal de la partie centrale (43) de l'arbre au moyen d'un élément élastique (55), qui est relié à son autre extrémité à
- un corps de torsion cylindrique (46) à paroi mince qui, à son tour, est accouplé extérieurement à son autre extrémité, par un flasque (45), à une partie (40) de l'arbre dirigée vers le groupe d'entraînement, et présente dans son volume intérieur, un perçage fileté central (49) ménagé dans une plaque renforcée (47),
- un poussoir (59) dont une extrémité formant un filetage extérieur (60) est en prise avec le perçage fileté (49), qui s'étend à travers le corps de torsion (46) et l'arbre creux (51) jusqu'à la partie centrale (53) de l'arbre, et dont l'autre extrémité est accouplée rigidement à cette partie d'arbre en son centre.

6. Dispositif selon une des revendications précédentes, caractérisé en ce qu'on utilise comme élément élastique (16, 24 ; 55, 57), un paquet de lames de ressort formé par empilement de lamelles d'acier de section transversale rectangulaire.
